# EUROPEAN PATENT SPECIFICATION

(11) **EP 0 993 746 B1**
(45) Date of publication and mention of the grant of the patent: **21.01.2009**
(21) Application number: 98940973.5
(22) Date of filing: 18.08.1998
(51) Int. Cl.: H04W 4/24

(54) **VEHICLE COMMUNICATION SYSTEM**
FAHRZEUGKOMMUNIKATIONSSYSTEM
SYSTEME DE COMMUNICATION ENTRE VEHICULES

(30) Priority: 18.08.1997 US 912704; 19.08.1997 US 914102
(43) Date of publication of application: 19.04.2000
(73) Proprietor: QUALCOMM INCORPORATED, San Diego, CA 92121-1714 (US)
(72) Inventor: COPPINGER, James, B., Chattanooga, TN 37416 (US); HELMS, Robert, V., Chattanooga, TN 37421 (US); DOYLE, Thomas, F., San Diego, CA 92121 (US)
(74) Representative: Wagner, Karl H.
(86) International application number: PCT/US1998/017126
(87) International publication number: WO 1999/009768

(56) References cited:
- EP-A- 0 612 191
- WO-A-92/15168
- WO-A-94/15431
- WO-A-96/19786
- WO-A-96/29831
- DE-A- 19 692 449

## Description

### Field

The present invention relates to communication systems, and more particularly to a communication system and method for interfacing a public communication system with a mobile private communication system.

### Background

Operators of over-the-road vehicles, such as truck drivers, are often contacted while in transit by a dispatcher at a base station, who has been asked to relay a personal message. The trucking company typically has a private communication system (such as CB, shortwave radio, satellite, or other mobile communication system), so that it can contact the truck driver for company business while the truck is on the road. Relaying personal messages to the truck driver may be a severe burden on the dispatcher, who may receive many such personal messages to relay to many different truckers. Also, the dispatcher at the base station may fail to relay an urgent message to the truck driver or fail to deliver the urgent message on a timely basis. Thus, it is often difficult for someone to get a personal message to the truck driver.

The truck driver typically cannot use the private communication system to reach the party who has sent the personal message. If the message is urgent, such as "call home immediately," the truck driver must search for a pay phone, which may be miles away. Once at the pay phone, the driver often must search for change or a phone card to return the call, and may encounter busy signals or have to leave a message because the person trying to contact the truck driver is not present. These inconveniences result in lost time to the fleet and the truck driver, who is typically trying to reach a destination within a set time period.

The problem with the present system is that there is no way for the truck driver to use the private communication system to contact the other person over the public communication system, without having the dispatcher physically relay the message between the private communication system and the public communication system. Similarly, there is no way for the other person to use the public communication system to contact the truck driver over the private communication system, without again having the dispatcher physically relay the message between the public communication system and the private communication system.

Furthermore, attention is drawn to the document WO 96 29831, which discloses a call delivery system for delivering a call to a mobile unit on a vehicle. The system includes both a data communications network and a mobile voice communications network. The mobile unit generates call delivery information and communicates this information to a platform using the data communications network. The platform receives a call for the mobile unit. The platform retrieves call delivery information received from the mobile unit and establishes communications between the platform and the mobile unit using the mobile voice communications network. The platform then completes the call between the caller and the mobile unit. Alternatively, the platform can generate a callback message for transmission to the mobile unit using the data communications network.

Furthermore attention is drawn to the document WO 92 15168 A, where a cordless telephone communication system is provided which includes a plurality of subscriber cordless telephones capable of communicating with a PSTN through a plurality of remotely located public base stations. Each public base station has a message center which includes accesary devices such as facsimile machines and printers, for providing services which are generally available in an office environment. The subscriber may use the message upon validation of a billing account which incurs charges associated with the usage of the message center.

In accordance with the present invention, an apparatus for sending a message between a public communications system and a private communication system, as set forth in claim 1, a method for communicating messages between a public communication system user and a vehicle operator, as set forth in claim 16, and a method for communicating messages between a vehicle operator and a public communications system user, as set forth in claim 20, are provided. Preferred embodiments of the invention are claimed in the dependent claims.

The above difficulties and disadvantages of the prior art are overcome by an apparatus and method for sending messages between a public communication system user and a vehicle operator using a private communication system. The private communication system comprises at least one mobile communication terminal located on a corresponding vehicle, a hub, and a fleet computer system located at the hub. In a first embodiment, the public communication system comprises a telephone communication system wherein a telephone user inputs an identification number associated with a specified vehicle operator and for selecting one of a menu of messages from a voice response unit. A telephone interface system receives the identification number and the selected message from the telephone communication system and the identification number to a local management system.

In a second embodiment, the public communication system comprises, alternatively, or in addition to the telephone communication system, a publicly accessible computer network system. A user generates an e-mail message using electronic means connected to the publicly accessible computer network system. The e-mail message further comprises a corresponding address and identification number. The e-mail message and associated information is sent to a local management system.

In either embodiment, the local management system checks the identification number provided by the public communication system against a list of valid identification numbers and adjusts an account associated with the identification number if a valid identification number is found. The message is then converted into a format suitable for the private communication system and then sent to the mobile communication terminal by way of the private communication system if the account contains a sufficient balance to send the message.

A communication method provides, in a first embodiment, a public communication system comprising a telephone communication system for receiving an identification number from an authorized user. A plurality of messages is then presented to the telephone communication system user, and one of the plurality of messages is selected by the telephone communication system user. In a second embodiment, the public communication system comprises, alternatively, or in addition to the telephone communication system, a publicly accessible computer network. In this embodiment, e-mail messages generated by electronic means and sent to the publicly accessible computer network. The e-mail messages are then routed to a local management system.

In either embodiment, an account associated with the identification number is checked for a balance sufficient to send the message, and the account associated with the identification number is adjusted. If the account balance is sufficient, the message is converted into a format suitable for the private communication system and then sent to the private communication system.

Other objects, features and advantages will become apparent by reference to the following detailed description when considered in conjunction with the accompanying drawings.

### Brief Description of the Drawings

Fig. 1 depicts a communication system for interfacing a public communication system with a mobile private communication system;
Fig.2 depicts a mobile communication terminal;
Fig. 3 is a circuit schematic of the mobile communication terminal;
Figs. 4A-4H are flow charts showing method steps of a first embodiment of the present invention; and
Figs. 5A-5F are flow charts showing method steps of a second embodiment of the present invention.

### Detailed Description

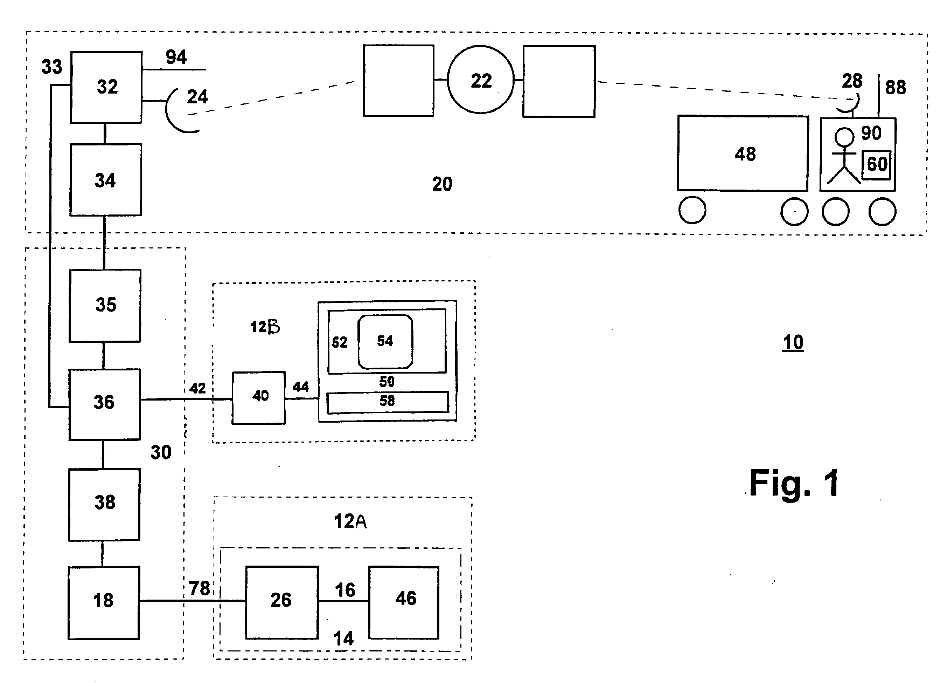

Commencing with Fig. 1, a communication system 10 for interfacing and transmitting messages between public communication systems 12a and 12b and a mobile private communication system 20 is shown. The private communication system 20 includes a communication device such as a satellite dish 28 or preferably an antennae 88, which is mounted in a plurality of vehicles, such as a fleet of semi-trailers or trucks 48. The satellite dish 28 or antennae 88 is connected to a mobile communication terminal 60, which can be cellular based, but is preferably satellite based for transmitting messages to, and receiving messages from, a satellite 22. The mobile communication terminal 60 is discussed in greater detail below. The satellite 22 sends and receives messages to and from a satellite dish 24 or antennae 94, which is in communication with a satellite hub 32, which processes the messages sent to and from the satellite 22 into computer readable form. Further included in the satellite hub 32 is a satellite network interface for communicating with the satellite 22.

A fleet computer system 34 is also a part of the private mobile communication system 20. The fleet computer system 34 is typically located at the headquarters or dispatch center for a trucking company. The fleet computer system 34 is connected to an interface 30, which contains means for interfacing public communication systems 12a and 12b to the private communication system 20. The fleet computer system 34 is connected to a remote management system 35, which is a part of the interface 30. However, the remote management system 35 preferably resides as a software routine on the fleet computer system 34, and is added to the fleet computer system 34 to implement the method.

The remote management system 35 is in communication with a local management system 36. Preferably, the local management system 36 physically resides at a location apart from the fleet computer system 34, and may be in communication with many remote management systems 35 and fleet computer systems 34. Some fleet computer systems 34 may not be able to host the remote management system 35, and thus would not be able to communicate with the local management system 36. In this event, the satellite hub 32 would be in direct communication with the local management system 36, such as by line 33.

The local management system 36 is in communication with a voice response unit 38, which provides messages for selection and transmission to the truck driver 90. The voice response unit 38 is connected to a telephone interface system 18, which is in turn connected to a telephone network interface 26 via line 78, which is a part of a public telephone communication system 14, and also a part of the public communication system 12a. The telephone network interface 26 is connected to telephones 46 via lines 16. The telephones 46 of the public communication system 12a are one means by which a message may be relayed to the truck driver 90.

Local management system 36 may, alternatively, or in addition, be in communication with public communication system 12b, such as with a publicly accessible computer network system like the Internet 40, via line 42. E-mail messages may be received and transmitted by local management system 36 through public communication system 12b.

Each of the trucks 48 is operated by a truck driver 90 who may either send or receive a message over the private mobile communication system 20, and is thus either a private sender or a private recipient of a message. The truck driver 90 has a unique identification number and an account, such as a sum of money, associated with the unique identification number. A set amount of money can be adjusted in the account each time the truck driver 90 sends or receives a message between the private communication system 20 and the public communication system 12. The adjustment may be in the form of a debit for use of the interface 30, or may be a credit in the event of an overcharge, special promotion, deposit, or other event. Preferably, the local management system 36 administers the account.

The account is replenishable in a number of different ways. For example, the debits to the account can be deducted from the truck driver's payroll account. This can be done by transmitting information from the local management system 36 to the remote management system 35, which is in communication with the fleet computer system 34. Preferably, the fleet computer system 34 has access to the payroll account of the truck driver 90. Thus, the local management system 36 can request and receive authorization for an adjustment to the payroll account of the truck driver 90. This adjustment may be a debit, such as a one-time debit of a given amount of money, or a weekly debit of a given amount of money.

The account can also be replenished by automatically debiting the credit card of the truck driver 90. Further, the truck driver 90 may be required to keep a certain amount of money in the account in order to send and receive messages, which amount could be deposited in the account by any one of a number of payment methods, such as money transfer, personal check, money order, or credit card. The truck driver 90 could also replenish the account by sending a message to the fleet computer system 34 requesting a loan or transfer. Further, the account may be a credit account with a preset limit, against which the truck driver 90 may draw. The truck driver 90 can then be billed, such as monthly, for the debited amount of the account.

Thus, the truck driver 90 pays for the ability to send and receive messages between the private mobile communication system 20 and the public communication systems 12a and 12b. This payment may be on either a prepaid basis or a post-paid basis by reducing a balance in a prepaid account, debiting a declining balance account, drawing against a prepaid account, charging a credit card account, drawing against a payroll advance, drawing against payroll, or accumulating charges and sending an invoice for payment. Preferably, the local management system 36 provides the cost accounting means to administer the account associated with each unique identification number whenever a message is transmitted to or received from the mobile communication terminal 60.

In a second embodiment of the present invention, the communication system 10 further allows an e-mail message over the Internet 40 to be sent to the mobile communication terminal 60. An electronic means, such as computer 50, connected to the Internet 40 via line 44, has a keyboard 58 and a display 52 for presenting messages 54. A person seeking to send a message to the truck driver 90 may send an e-mail message via the computer 50 by using the unique identification number of the truck driver 90 associated with an e-mail address, and sending the e-mail message over the Internet 40, through the interface 30, to the satellite 22, and finally to the mobile communication terminal 60.

It is possible that an unauthorized user may acquire the identification number of the truck driver 90, and use the identification number to send unwanted e-mail messages, such as advertisements or harassing messages, to the truck driver 90. This would cause the truck driver 90's account to be charged for the messages, resulting in unwanted expenses to the truck driver 90. To prevent such occurrences, the truck driver 90 may preferably enter a code, such as an alphanumeric string, into the mobile communication terminal 60. The code is selectable by the truck driver 90, and can be changed at any time. Upon entering the code, the system checks e-mail messages being routed to the truck driver 90 for the same code.

If the e-mail message does not contain the code, such as in the subject line of the message, then the system assumes that the e-mail is an unauthorized transmission. The system can be programmed to perform one or more of several different actions at this point, such as either store the message, alert the truck driver 90 and request instructions, or automatically delete the message. The truck driver 90 may also remove the code, so that all e-mail messages are routed to him. In this manner, the truck driver 90 has some control over which e-mail messages he receives and is charged for, and who can send those e-mail messages.

In the first embodiment of the present invention, a person seeking to send a message to the truck driver 90 in one of the trucks 48 uses the telephone 46 to access the telephone interface system 18, and is prompted to input the unique identification number for the truck driver 90 and select one of a plurality of messages, discussed in greater detail below. The person may select the message by either pressing a button on the telephone 46 or speaking a command into the telephone. The message will then be sent from the public telephone communication system 14 of the public communication system 12a via interface 30 to the mobile communication terminal 60 of the private communication system 20.

The interface 30 also provides the driver 90 with the ability to send messages to a voice mailbox associated with the unique identification number. The messages may be entered into the system as voice mail, such as by the driver 90 using the public telephone communication system 14 to access the interface 30, entering the unique identification number, and speaking a message into the system. The system then records the message, and plays the message back when the driver 90, or another person, accesses the interface 30 from the public telephone communication system 14, enters the unique identification number, and requests voice mail messages.

Additionally, the driver 90 can access the interface 30 from the private mobile communication system 20 using the mobile communication terminal 60. The message is entered as text on the mobile communication terminal 60, and relayed to the interface 30 as described in more detail below. The message can be accessed from the public telephone communication system 14 by dialing into the interface 30, entering the unique identification number, and requesting the text messages. The voice response unit 38 then coverts the text message to speech, and delivers it over the telephone.

The cost accounting means of the interface tracks the account balance associated with the unique identification number, for both the voice mail messages and the text to speech messages, and debits the account for the receipt of each message by the interface 30. If the account has a balance at least equal to an amount required to store the text or voice mail message, then it is stored by the interface 30 and is available to be accessed by public communication systems 12a and 12b.

Typically, a given mobile communication terminal 60 will remain associated with a given truck 48, while many different operators 90 may operate the truck 48 and mobile communication terminal 60 from time to time. Thus, there is preferably a registration method for associating the driver's identification number, also referred to as an administration number or user ID, with the identification number of the mobile communication terminal 60. This registration procedure is most preferably done at the mobile communication terminal 60 by the driver 90, such as by entering the user ID during a registration, or log-on, procedure. Once the identification number of the driver 90 is associated with the identification number of the mobile communication terminal 60, the various elements of the system will know which truck 48 and mobile communication terminal 60 the messages containing the driver 90's identification number should be routed to.

Thus, a driver 90 may log on and off of different mobile communication terminals 60 over a period of time, and the messages to the driver 90 will always be properly routed. The driver 90 may log off of a given mobile communication terminal 60 without immediately logging back on to the same or a different mobile communication terminal 60. In this case, the messages to be sent to the driver 90 will be stored for at least a given length of time, and will be then sent to the proper mobile communication terminal 60 at such time that the driver 90 logs back on to the system.

In the second embodiment of the present invention, the communication system 10 further allows an e-mail message over the Internet 40 to be sent to the mobile communication terminal 60. An electronic means, such as computer 50, connected to the Internet 40 via line 44, has a keyboard 58 and a display 52 for presenting messages 54. A person seeking to send a message to the truck driver 90 may send an e-mail message via the computer 50 by using the unique identification number of the truck driver 90 associated with an e-mail address, and sending the e-mail message over the Internet 40, through the interface 30, to the satellite 22, and finally to the mobile communication terminal 60.

It is possible that an unauthorized user may acquire the identification number of the truck driver 90, and use the identification number to send unwanted e-mail messages, such as advertisements or harassing messages, to the truck driver 90. This would cause the truck driver 90's account to be charged for the messages, resulting in unwanted expenses to the truck driver 90. To prevent such occurrences, the truck driver 90 may preferably enter a code, such as an alphanumeric string, into the mobile communication terminal 60. The code is selectable by the truck driver 90, and can be changed at any time. Upon entering the code, the system checks e-mail messages being routed to the truck driver 90 for the same code.

If the e-mail message does not contain the code, such as in the subject line of the message, then the system assumes that the e-mail is an unauthorized transmission. The system can be programmed to perform one or more of several different actions at this point, such as either store the message, alert the truck driver 90 and request instructions, or automatically delete the message. The truck driver 90 may also remove the code, so that all e-mail messages are routed to him. In this manner, the truck driver 90 has some control over which e-mail messages he receives and is charged for, and who can send those e-mail messages.

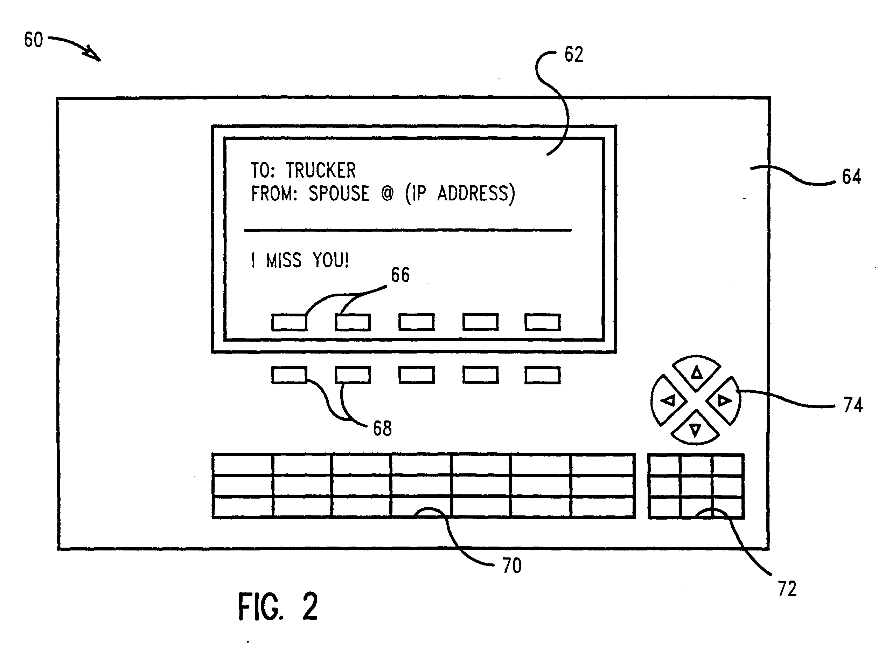

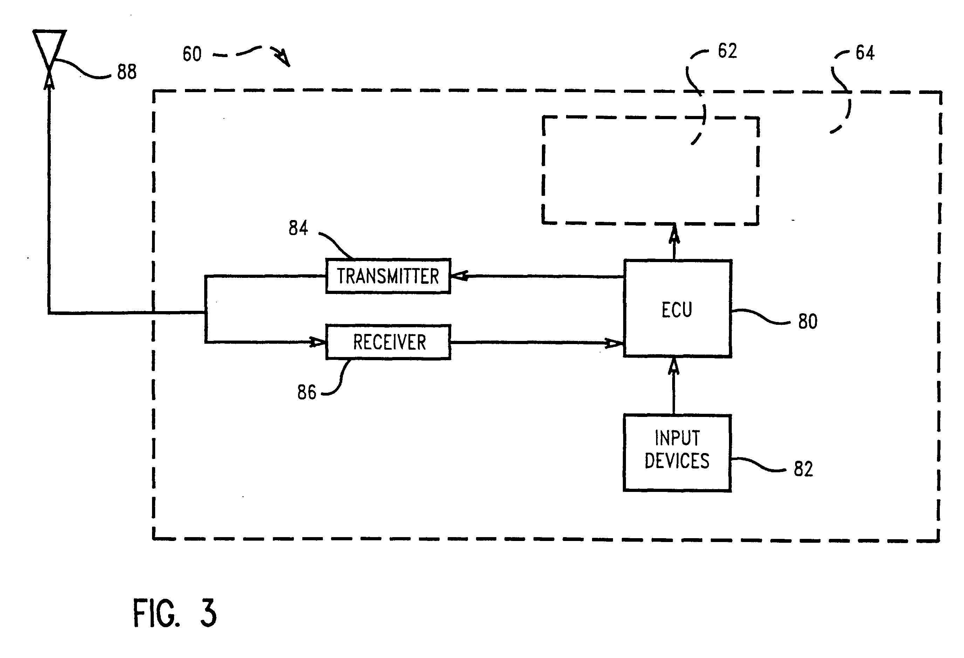

The mobile communication terminal 60 is shown in greater detail in Figs. 2 and 3. The mobile communication terminal 60 includes a display 62 for displaying messages. Shown on display 62 are a plurality of function indices 66 for prompting the truck driver 90, and which correspond to associated panel buttons 68. Further provided on mobile communication terminal 60 is an alpha keypad 70 and a numeric keypad 72. A cursor controlled device 74 is also mounted on display 62 for guiding a cursor around display 62.

As shown in Fig. 3, the mobile communication terminal 60 disposed in the truck 48 includes an electronic control unit 80 that has memory (volatile and non-volatile), bus lines (address, control and data) and other hardware, software, and firmware required for manipulation of the messages sent to and from the mobile communication terminal 60. In communication with the electronic control unit 80 are the input devices 82, which include the alpha keypad 70, numeric keypad 72, and cursor control device 74. Also in communication with the electronic control unit 80 is a receiver 86 for receiving the messages from the antennae 88 or satellite dish 28. The mobile communication terminal 60 also includes a transmitter 84, which transmits the messages from the mobile communication terminal 60 to the antennae 88 or satellite dish 28 and then to satellite 22. The transmitter 84 and the receiver 86 may be contained in a single transceiver unit having the functions and capabilities of each.

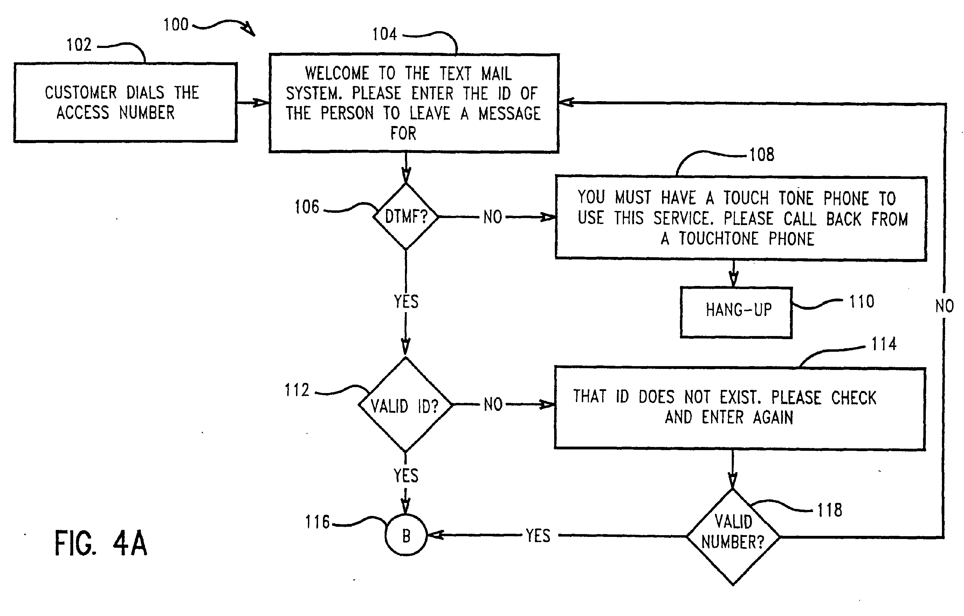

Referring now to Fig. 4A, a communication method 100, in accordance with the first embodiment of the present invention, is shown, which begins in task block 102 with an authorized user dialing into the telephone interface system 18 via a telephone 46 that is included in the public communication system 12. Next, in task block 104 a welcome message is presented to the authorized user on a telephone, such as by an audio signal, and the authorized user is prompted to enter the unique identification number of the truck driver 90.

The method 100 continues to task block 106 where the interface 30 determines whether a DTMF (dial tone modulated frequency) has been received from the telephone 46. If it has not, the method determines that the authorized user seeking to send a message to the truck driver 90 is calling from a non-touch tone phone. That authorized user is then prompted in task block 108 to call back at a latter time from a touch tone phone and the method continues to task block 110 and cuts off communication with the public telephone communication system 14 or hangs-up on the authorized user. If, however, it is determined in decision block 106 that the authorized user is calling from a touch tone phone, the method continues to decision block 112 and determines whether a valid identification number, from a list contained within the fleet computer system 34, has been input.

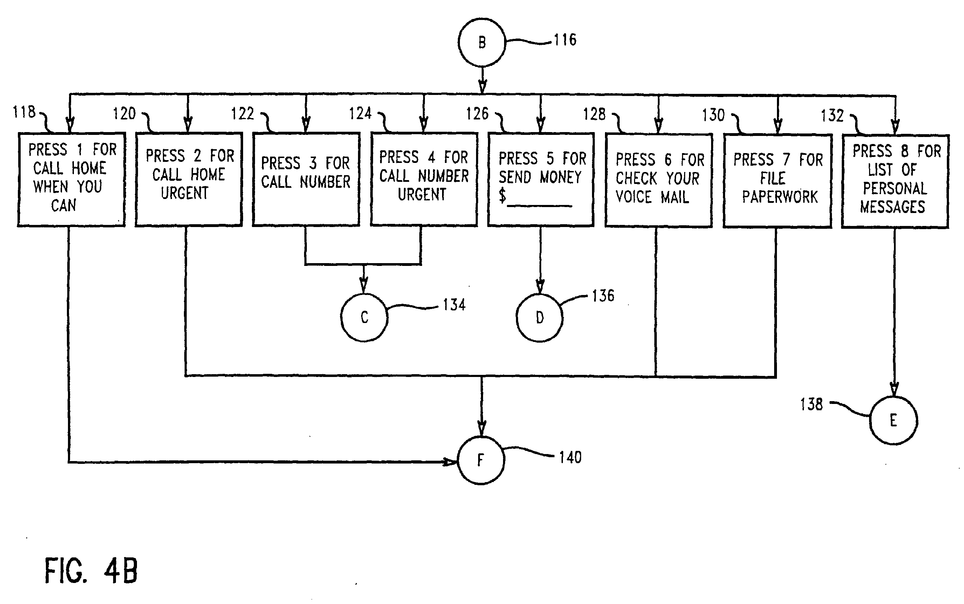

If a valid identification has not been given, the method moves to task block 114 and notifies the authorized user that the identification number input into the phone 46 does not exist and the authorized user is requested to input a new identification number. The method then continues to decision block 118 whereby it is determined whether a valid identification number has been entered. If it has not, the method 100 returns to task block 104. If a valid identification number has been input in decision block 118 the method moves to circle 116, which continues in Fig. 4B. Similarly, if in decision block 112 the method determines that a valid identification number has been entered, the method continues to circle 116.

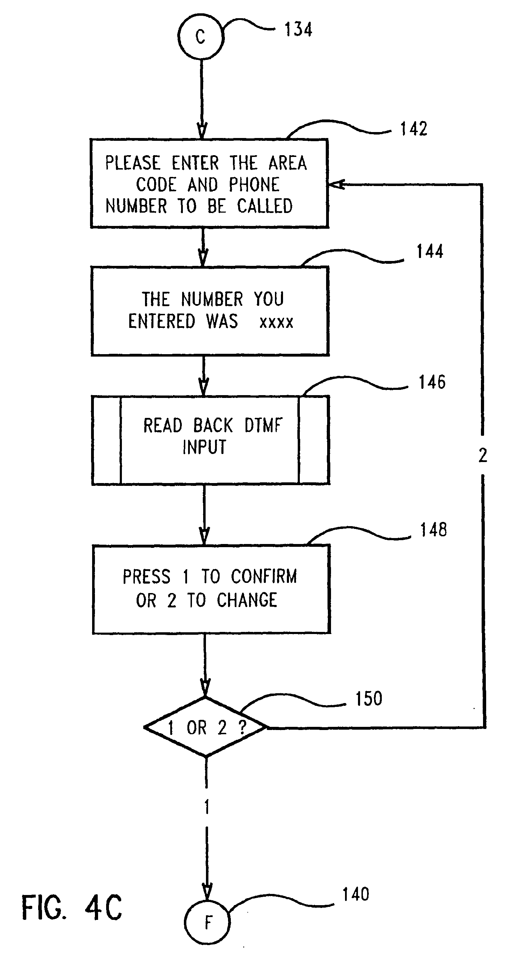

From circle 116 in Fig. 4B, the method prompts the authorized user as to a plurality of messages represented in blocks 118 through 132. It is expressly understood that the messages shown in these blocks are exemplary only, and may be any type of message desired to be communicated to the truck driver 90. In task block 118, the authorized user is prompted to press the number 1 for sending a message to the truck driver 90 in the form of "call home when you can." If a number 1 is pressed, the method continues to circle 140. In task block 120, the authorized user is prompted to press number 2 to send the message "call home urgent!" If the number 2 is pressed, the method again continues to circle 140. In task block 122, the authorized user is prompted to press number 3 to send the message "call number." If the number 3 is pressed, the method continues to circle 134. In task block 124 the authorized user is prompted to press number 4 to send the message "call number urgent!" If number 4 is pressed the method also continues to circle 134, which continues in Fig. 4C.

From circle 134 in Fig. 4C, the method continues to task block 142 whereby the authorized user is prompted to enter the area code and phone number that the truck driver 90 is requested to call. Once the number is input, the method continues to task blocks 144 and 146 whereby the number entered by the authorized user is read back to the operator for verification. The method next continues to task block 148 whereby the authorized user is prompted to press number 1 to confirm the telephone number entered or number 2 to change the telephone number entered. The method next continues to block 150 whereby if the number 2 is pressed, the method returns to task block 142 and prompts for a new area code and phone number to be entered by the authorized user. If, however, a number 1 is pressed, the method continues to circle 140.

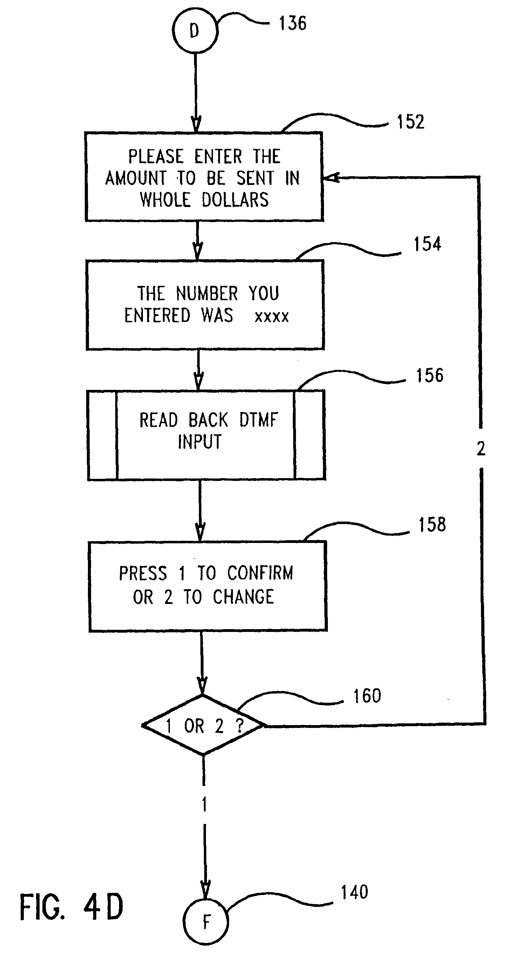

Returning to Fig. 4B, at task block 126, the authorized user is requested to press number 5 to send the message "send money," and the method continues to circle 136, which continues in Fig. 4D. From circle 136 in Fig. 4D the method continues to task block 152 and the authorized user is prompted to enter the amount of money to be sent in whole dollars. The method next continues to task blocks 154 and 156 whereby the amount of whole dollars entered is read back to the authorized user. The method then continues to task block 158 whereby the authorized user is requested to press number 1 to confirm the whole dollar amount or number 2 to change the amount. The method then continues to decision block 160 whereby it is determined whether number 1 or number 2 has been pressed by the authorized user. If number 2 has been pressed, the method returns to task block 152 whereby the authorized user is requested to enter a new dollar amount. If, however, in decision block 160 the number 1 is pressed, the method continues to circle 140.

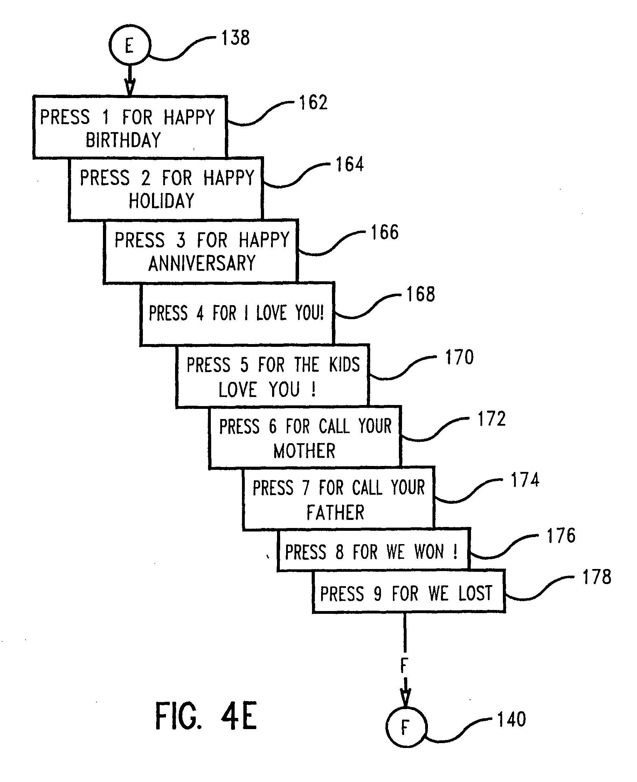

Returning now to Fig. 4B, in task block 132 the authorized user is requested to press number 8 to receive a listing of personal messages that can be sent to the truck driver 90. If number 8 is pressed, the method continues to circle 138, which continues in Fig. 4E. The method then repeats a plurality of personal messages in task blocks 162-182. It is expressly understood that these personal messages are exemplary only and can be of any nature or form.

In task block 162 the authorized user is prompted to press the number 1 to send the message "Happy Birthday." In task block 164 the authorized user is prompted to press the number 2 to send the personal message "Happy Holiday." In task block 166, the authorized user is prompted to press number 3 to send the message "Happy Anniversary." In task block 168 the authorized user is prompted to press number 4 to send the message "I Love You!" in task block 170 the authorized user is prompted to press number 5 to send the message "The kids love you!" in task block 172, the authorized user is prompted to press number 6 "Call your mother." In task block 174, the authorized user is prompted to press number 7 to send the message "Call your father". In task block 176, the authorized user is prompted to press number 8 to send the message "We won!" And in task block 178 the authorized user is prompted to press the number 9 to send the message "We lost." The method then continues to circle 140. At any time during the prompting of the personal messages in task block 162 through 182 the authorized user may press the prompted alpha-numeric key from the telephone 46 to send one of the personal messages to the truck driver 90.

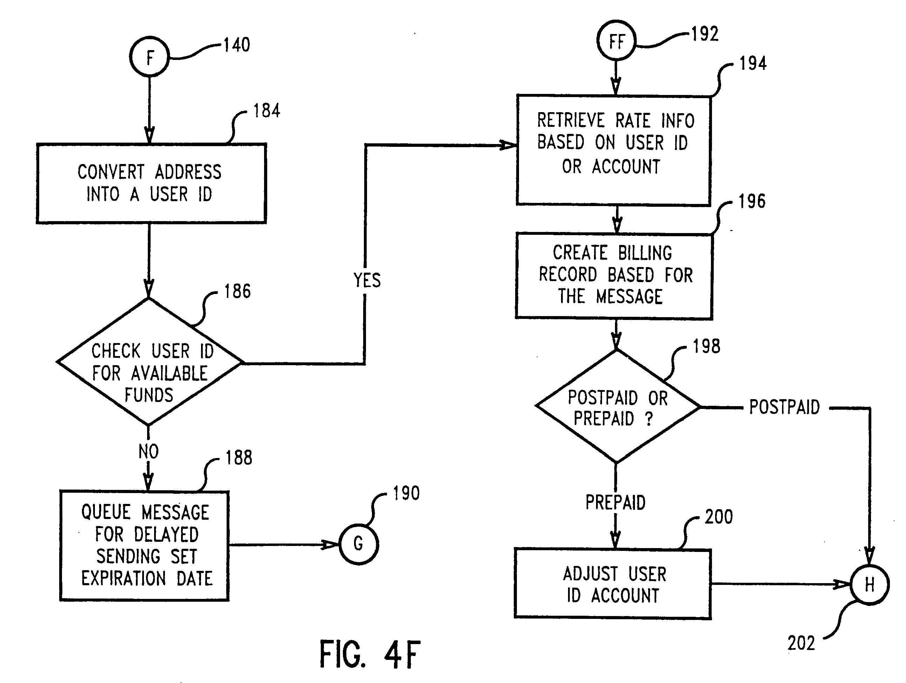

Returning now to Fig. 4B, in task block 128 the authorized user is prompted to press number 6 to send the message "Check your voice mail." If the number 6 is pressed, the method continues to circle 140. In task block 130, the authorized user is prompted to press the number 7 to send the message "File paperwork." If number 7 is pressed, the method continues to circle 140, which continues in Fig. 4F.

From circle 140 in Fig. 4F, the method continues to task block 184 whereby the address is converted or mapped into one of the unique user identifications stored in the fleet computer system 34 of the interface 30, and is converted into an electronic identification number. The method then continues to decision block 186 whereby the sum of money associated with the unique user identification is checked to determine whether the account associated with the user identification has a sufficient amount of money or credit or other authorization available to transmit the message. If it does not, the method continues to task block 188 whereby the message is cued for delayed sending to the truck driver 90 and an expiration date is set for the message. The method next continues to circle 190.

If, however, it is determined that the account does have sufficient money or authorization associated with the unique user identification, or is of the type that bills a credit card or debits a payroll account, then the method continues to task block 194 whereby the billing rate for transferring one of the messages to the truck driver 90 is determined from the unique user identification or a billing account associated with the unique user identification. The billing rate information is based on factors such as length of time the authorized user is in communication with the telephone communication system 14, length of the message sent to the truck driver 90, and any special billing fees to be added. The method next continues to task block 196 whereby a billing record is created for the message.

The method next continues to decision block 198 whereby it is determined whether the truck driver 90 will postpay or prepay for the cost associated with sending the message. If the account associated with the unique identification number is a postpaid account, the method continues to circle 202. If, however, the account is a prepaid account, a set amount of money is deducted from the sum of money associated with the unique user identification, and this amount is noted on billing records for the truck driver 90. The method then continues to circle 202.

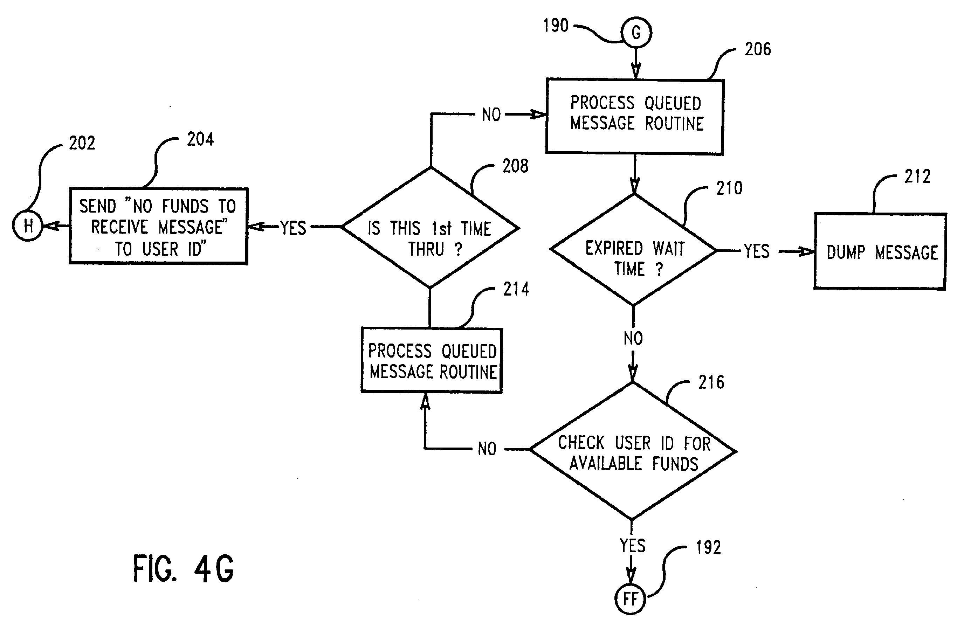

Referring now to Fig. 4G, from circle 190 the method continues to task block 206 whereby a software controlled message routine is implemented by the fleet computer system 34. For example, certain messages are given priority over other messages, such as "Call home, urgent." The method next continues to decision block 210 whereby it is determined whether the wait time for the delayed cued message in block 188 of Fig. 4F has expired. If it has, the method continues to task block 212 and deletes the message. If, however, the wait time has not expired, the method continues to decision block 216 whereby the account of the truck driver 90 is again checked to determine whether there is a sufficient sum of money therein. If there is sufficient money, the method continues to circle 192.

If, however, there are insufficient funds in the account the method continues to task block 214 whereby the process cued message routine is executed again as in task block 206. The method then continues to decision block 208 to determine whether it is a first pass through the method. If it is the first time through, the method continues to task block 204 whereby the message "No funds to receive message" is generated, and the method then continues to circle 202. On subsequent passes through the method, the method returns control to task block 206 to cycle through the routine again. Therefore, the method 100 allows the truck driver 90 an amount of time ranging from one hour to several weeks depending upon the wait time associated for the cued message stored in the fleet computer system 34. This allows the truck driver 90 sufficient time, such as over the span of a pay period, to replenish the account.

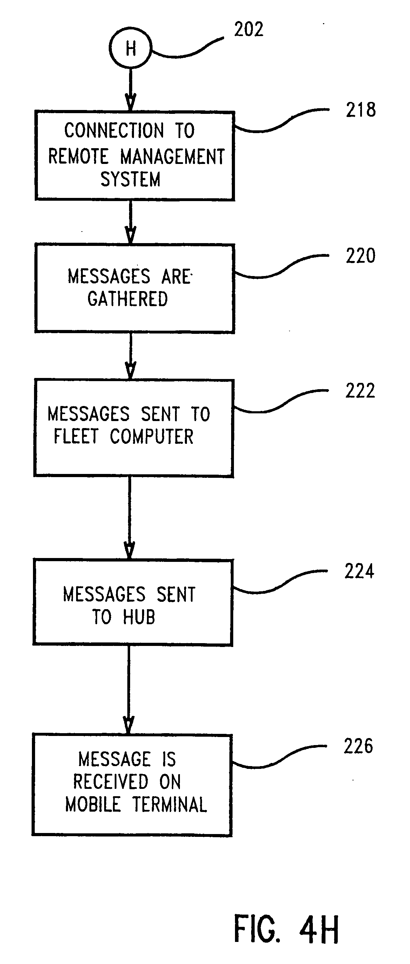

Circle 202 continues in Fig. 4H, whereby the method continues to task block 218 whereby a connection to a remote processor contained in the fleet computer system 34 is made, and in task block 220 the messages are gathered for the entire private communication system 20 having a fleet of trucks 48. The method then continues to task block 222 whereby the messages are separated into various groups for different fleets of trucks 48. This is also accomplished within the fleet computer system 34. The method then continues to task block 224 whereby the messages are sent to the satellite network interface 32, which beams the messages to the satellite 22. The method then continues to task block 226 whereby the messages are received by the mobile communication terminals 60.

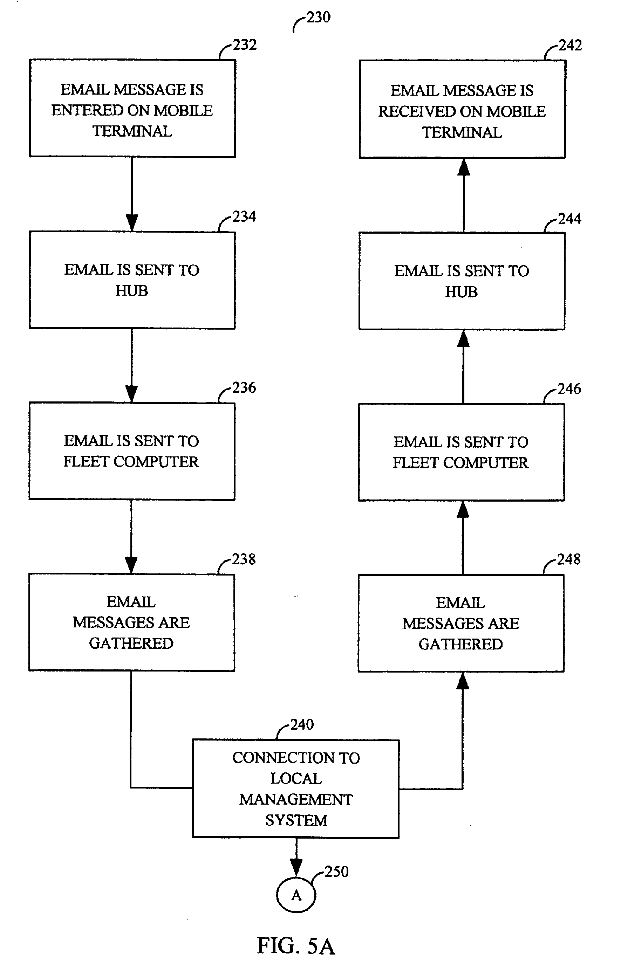

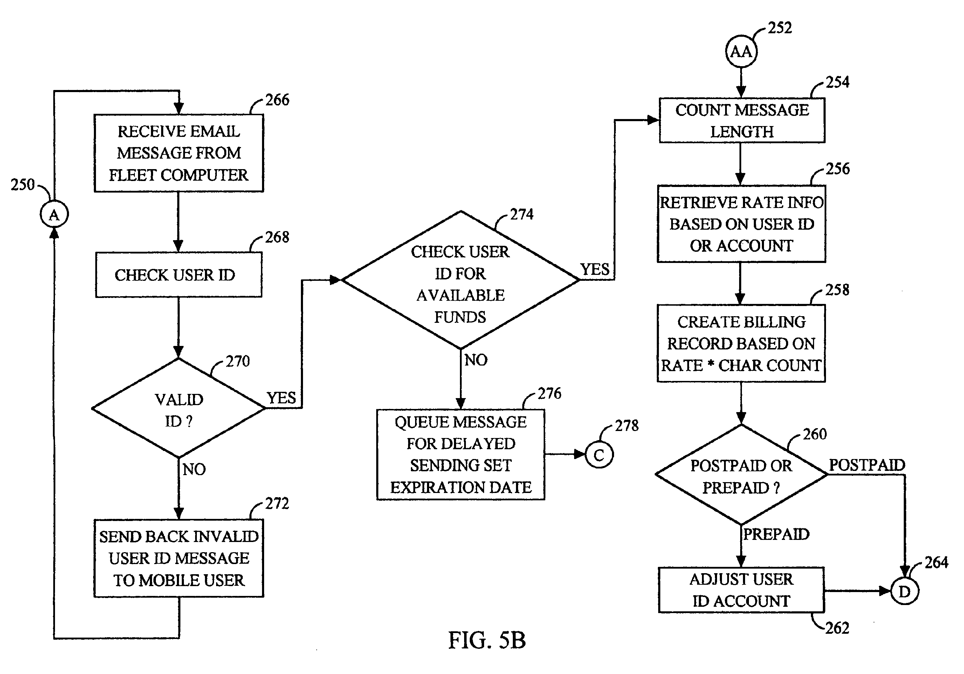

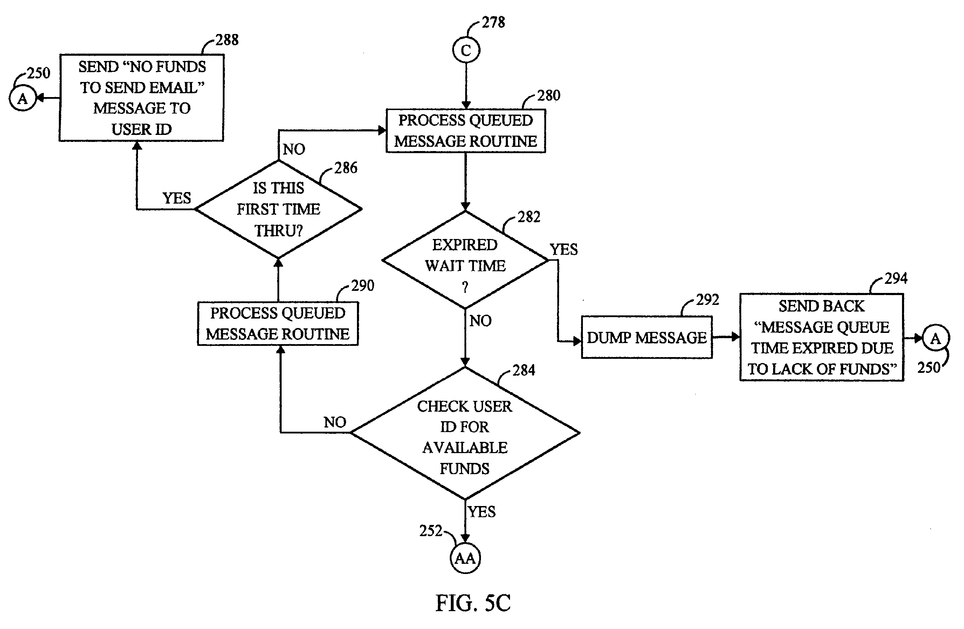

Referring now to Fig. 5A there is depicted system 230, in accordance with the second embodiment of the present invention, for exchanging messages from a public communication system, which is the Internet 40. One portion of the method 230 starts in task block 232 wherein an e-mail message is entered on the mobile communication terminal 60 disposed in the truck 48. The method then continues to task block 234 whereby the e-mail message is sent to the satellite 22 and transmitted to the interface 30. The method then continues to task block 236 whereby the e-mail message is received by the satellite network interface 32 and converted into or routed to an e-mail typed message format. The method then continues to task block 238 whereby the e-mail messages are gathered from the various fleets of trucks 48 and the method continues to task block 240 whereby a dial out connection via a modem, or a direct connection to the fleet computer system 34 is made. The method then continues to circle 250, which is continued in Fig. 5B.

The method then continues to task block 266 whereby the e-mail message is read by the fleet computer system 34. The method then continues to task block 268 whereby an address block of the e-mail message is checked to determine whether a unique identification number of the truck driver 90 has been input, which also continues in decision block 270. If one of the unique identification numbers has not been input, an invalid user identification message is sent back to the truck driver 90 in task block 272 and the method continues to circle 250, which is continued in Fig. 5A. At this time, the returned e-mail message along with other e-mail messages for a particular trucking fleet are gathered in task block 248, depicted in Fig. 5A, and the method continues to task block 246 whereby the e-mail messages are routed as e-mail typed messages. The method then continues to task block 244 whereby the e-mail is sent from the fleet computer system 34 to the satellite network interface 32 and transmitted to the satellite 22. The method then moves to task block 242 whereby each e-mail message is sent from the satellite 22 to one of the mobile communication terminals 60.

If, however, it is determined in decision block 270 of Fig. 5B that a valid identification number is being used, the method continues to decision block 274 whereby the account associated with the unique identification number is checked to determine whether sufficient money exists therein. If it does not, the method continues to task block 276 whereby the e-mail message is delayed for sending at a later time and an expiration date is set for the message. The method then continues to circle 278.

If, however, it is determined in decision block 274 that a sufficient sum of money is available in the account of the truck driver 90, or if the account can be automatically replenished as described above, the method continues to task block 254 whereby the length of the e-mail message is counted by the fleet computer system 34. The method then continues to task block 256 whereby billing rate information based on the unique identification number or account of the truck driver 90 is retrieved. The method then continues to task block 258 whereby a e-mail length-dependent billing record is created based on the billing rate multiplied by the character count of the e-mail message.

The method then continues to decision block 260 whereby it is determined whether the account of the truck driver 90 is a postpaid or a prepaid account. If the account is postpaid, the method continues to circle 264. If, however, it is determined that the account is a prepaid account, the method continues to task block 262 and the multiplied amount of the billing rate and character count is deducted from the sum of money in the account of the truck driver 90. The method then continues to circle 264.

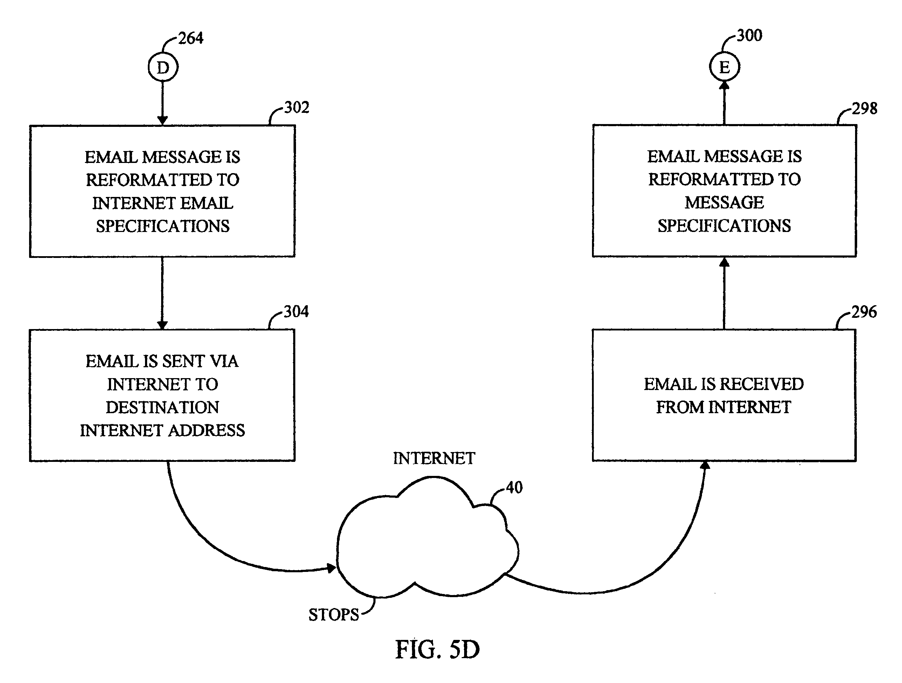

Referring now to Fig.5D, circle 264 continues to task block 302 whereby the e-mail message is reformatted to Internet e-mail specifications. The method then continues to task block 304 whereby the e-mail message is sent over Internet line 42 to the Internet 40, over line 44 and to the computer 50.

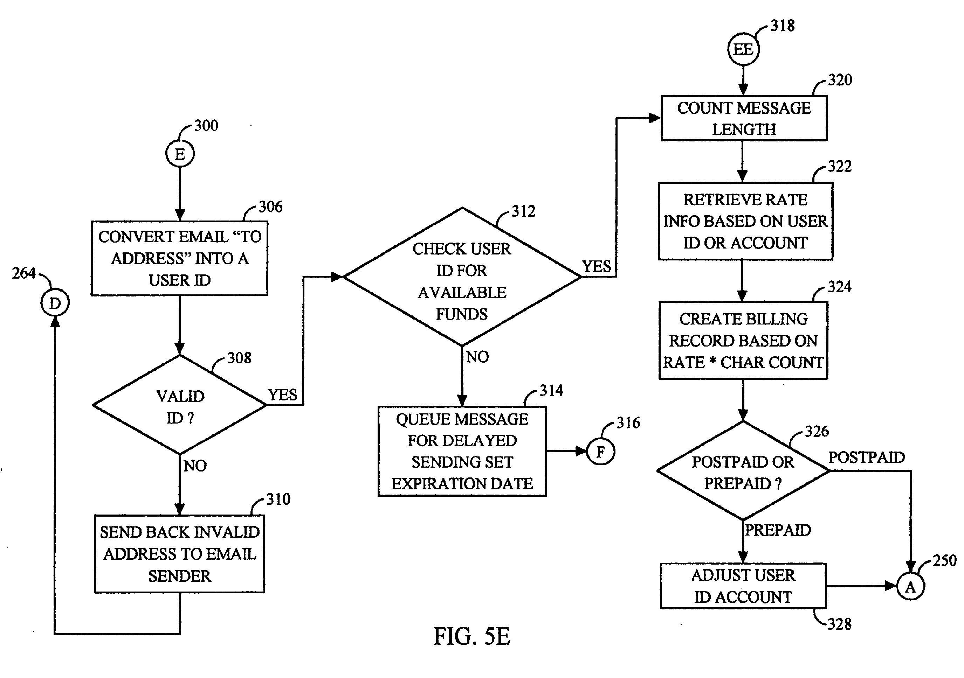

Now, considering the situation when an operator of the computer 50 seeks to send the e-mail message over line 44 to the Internet 40. As shown in Fig.5D, the method continues to task block 296 whereby the e-mail message is received from the Internet 40 and is formatted according to the message specifications for the private communication system in task block 298. The method then continues to circle 300, which continues at Fig. 5E at task block 306. In this task block, the method converts the e-mail message into the unique identification number for the truck driver 90 that the e-mail message is being sent to.

The method then continues to decision block 308 whereby it is determined by the fleet computer system 34 whether the identification number is valid. If it is not, the method continues to task block 310 whereby an invalid address message is sent to the operator of the computer 50 and the method continues to circle 264, which is shown in Fig. 5D. If, however, it is determined in decision block 308 that the identification number is valid, the method continues to decision block 312 whereby the account associated with the identification number is checked to determine whether a sufficient sum of money exists therein. If it does not, the method continues to task block 314 whereby the e-mail message is cued for later sending and an expiration date is attached to the e-mail message. The method then continues to circle 316.

If, however, it is determined at decision block 312 that the account associated with the unique identification number has a sufficient sum of money, or if the account can be automatically replenished as described above, the method continues to task block 320 whereby the length of the e-mail message is counted, and then the method continues to task block 322 whereby billing rate information based on the identification number or account of the truck driver 90 is retrieved from the fleet computer system 34. The method then continues to task block 324 whereby a billing record based upon the billing rate and multiplication of the character count of the e-mail message is created. The method then continues to decision block 326 whereby it is determined whether the truck driver 90 has a postpaid or a prepaid account. If the account is postpaid, the method continues to circle 250. If, however, the account is prepaid, the method continues to task block 328 whereby the multiplication of the billing rate and character count of the e-mail message is deducted from the sum of money and the truck driver 90's account and the method then continues to circle 250, which is then continued on Fig. 5A.

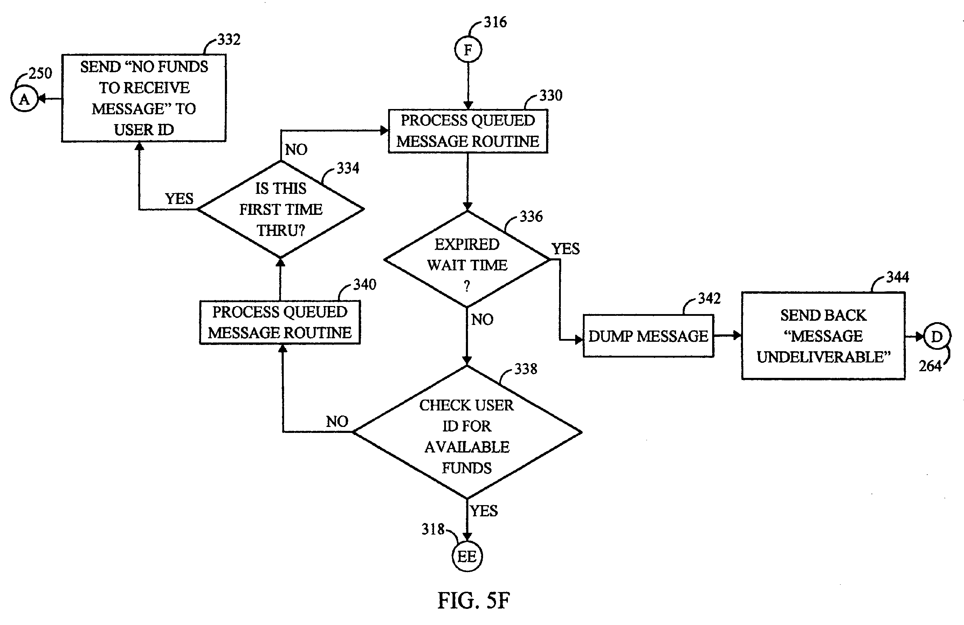

Referring to circle 316, from Fig. 5E and continued in Fig. 5F, the method then continues to task block 330 whereby the cued e-mail message routine is implemented by the fleet computer system 34, and other e-mail messages waiting to be sent to the truck driver 90 are placed in order. The method then continues to decision block 336 whereby it is determined whether the wait time for the cued e-mail message has expired. If the time has expired, the method continues to task block 342 whereby the e-mail message is deleted, and then continues to task block 344 whereby a "message undeliverable" is sent back to the operator of the computer 50. The method then continues to circle 264. If, however, it is determined in decision block 336 that the wait time has not expired, the method continues to decision block 338 whereby the account of the truck driver 90 is checked to determine whether sufficient money exists therein. If the account contains sufficient funds, then the method continues to circle 318, which is continued in Fig. 5E as discussed above.

If, however, the account of the truck driver 90 does not have sufficient money therein, the method continues to task block 340 whereby the cued message routine is again processed as in task block 330. The method then continues to decision block 334 whereby it is determined whether it is a first pass through the method. If it is, the method continues to task block 332 whereby the message "no funds to receive message" is sent to the truck driver 90. The method then continues to circle 250, which is continued in Fig. 5A. If, however, it is determined in decision block 334 that it is not the first time through the method, the method continues back to task block 330 and further waits for the truck driver 90 to transfer more money to the account is continued.

Referring back to circle 278, which continues from Fig. 5B to Fig. 5C, the method then continues to task block 280 whereby the e-mail message trying to be sent from the truck driver 90 is cued via a messaging routine in the fleet computer system 34. The method then continues to decision block 282 whereby it is determined whether the wait time for the e-mail message has expired. If it has, the method continues to task block 292 whereby the message is deleted and the message continues to task block 294 whereby a "message cue time expired due to lack of funds" message is sent back to the truck driver 90. The method then continues to circle 250, which continues in Fig. 5A.

If, however, it is determined in decision block 282 that the wait time has not expired for the e-mail message, the method continues to decision block 284 whereby the account associated with the identification number of the truck driver 90 is checked to determine whether sufficient money exists therein. If it does, the method continues to circle 252, which is continued in Fig. 5B. If, however, it is determined in decision block 284 that sufficient money does not exist in the account of the truck driver 90, the method continues to task block 290 whereby the message is cued again as in task block 280. The method then continues to decision block 286 whereby it is determined whether it is the first time through the method. If it is, the method continues to task block 280 whereby a message "no funds to send e-mail" is sent back to the truck driver 90. The method then continues to circle 250, which is continued in Fig. 5A. If, however, it is determined that it is not the first time through the method in decision block 286, the method continues back to task block 280. The above mentioned description is to be considered exemplary, rather than limiting, with the true scope defined in the following claims. What is claimed is:

## Claims

1. An apparatus for sending a message between a public communication system (12a, 12b) and a private communication system (20), the private communication system having at least one mobile communication terminal (60) located on a corresponding vehicle (48), a hub (32), and a fleet computer system (34) located at said hub (32), the apparatus comprising:
an interface (30) for receiving identification information and a message from a public communication system (12a, 12b);
a local management system (36) for checking an identification number against a list of valid identification numbers, for adjusting an account associated with said identification number, and adjusting said account in proportion to the length of said message;
means for converting said message into a format suitable for satellite transmission for the private communication system; and means for sending said message to said private communication system (20).

2. The apparatus of claim 1, further comprising, for adjusting said account in proportion to the length of said message, means for adjusting an account associated with said user identification number if the account balance is sufficient, or means for generating a bill for sending the message if the account balance is insufficient.

3. The apparatus according to claim 1, further comprising, for adjusting said account in proportion to the length of said message, means for adjusting the credit card account associated with the identification number.

4. The apparatus of claim 1, wherein said public communication system (12a, 12b) comprises a telephone communication system (14), said message comprises a message selected from a menu of messages, and said identification information comprises an identification number.

5. The apparatus of claim 1, wherein said public communication system (12a, 12b) is a publicly accessible computer network (40), said message comprises an e-mail message, and said identification information comprises an identification number and an address.

6. The apparatus of claim 4 wherein said interface (30) comprises a telephone interface system (18).

7. The apparatus of claim 4 further comprising:
a voice response unit (38) for providing said menu of messages to a public communication system user.

8. The apparatus of claim 7 wherein said voice response unit (38) is responsive to said user speaking into a telephone.

9. The apparatus of claim 7 wherein said voice response unit (38) is responsive to pressing a button on a telephone.

10. The apparatus of claim 7, wherein said voice response unit (38) comprises a text-to-speech converter.

11. The apparatus of claim 10 wherein said voice response unit (38) comprises a speech-to-text converter.

12. The apparatus of claim 1 further comprising a voice mailbox associated with said identification number.

13. The apparatus of claim 1 wherein said means for sending said message is responsive to said local management system (36).

14. The apparatus of claim 1 wherein said means for sending said message further comprises:
means for selectively associating said user identification with any one of said at least one mobile communication terminals (60).

15. The apparatus of claim 2 wherein the means for adjusting said account comprises:
means for adjusting a payroll account associated with the identification number.

16. The apparatus of claim 5 further wherein said interface comprises said local management system (36).

17. A method for communicating messages between a public communication system user and a vehicle operator (90) using a private communication system, comprising the steps of:
receiving a message and identification information from a public communication system (12a, 12b);
verifying that an account associated with said identification information contains a sufficient balance to send said message, or that a credit card account is associated with said identification information;
adjusting said account in proportion to the length of said message;
converting said message into a format suitable for satellite transmission for the private communication system (20); and
sending said message to said private communication system (20) if said account contains a sufficient balance.

18. The method of claim 17 wherein said public communication system (12a, 12b) is a publicly accessible computer network (40), said message comprises an e-mail message, and said identification information comprises an identification number and an address.

19. The method of claim 17 wherein said public communication system (12a, 12b) comprises a telephone communication system (14), said message is a message selected from a menu of messages, and said identification information comprises an identification number.

20. The method of claim 19 wherein the step of providing a message and identification information comprises the steps of:
generating a menu of messages by a voice response unit (38) and providing said menu to a telephone communication system user; and selecting at least one message from said menu of messages by said telephone communication system user.

21. A method for communicating messages between a vehicle operator (90) and a public communications system user, comprising the steps of:
transmitting a text message and identification information from a vehicle operator (90) using a private communication system to an interface (30);
storing said text message and said identification information in the interface (30) when an account associated with said identification information contains a balance at least equal to the amount required to store said text message or a credit account is associated with said identification information;
reducing the account balance or debiting the credit card account by the amount required to store the text message;
accessing said text message using said public communication systems (12a, 12b);
converting said text message from a format suitable for satellite transmission to a format suitable for the public communication system (12a, 12b); and
sending said converted text message from said interface (30) to said public communication system (12a, 12b).

22. The method of claim 21 wherein said public communication system (12a, 12b) comprises a telephone communication system (14).

23. The method of claim 21 wherein said public communication system (12a, 12b) comprises a publicly accessible computer network (40).

## Patentansprüche

1. Eine Vorrichtung zum Senden einer Nachricht zwischen einem öffentlichen Kommunikationssystem (12a, 12b) und einem privaten Kommunikationssystem (20), wobei das private Kommunikationssystem wenigstens ein Mobil-Kommunikationsendgerät (60) hat, das sich in einem entsprechenden Fahrzeug (48), einem Hub (32) und einem Flotten-Computersystem (34), das bei dem Hub (32) angeordnet ist, befindet, wobei die Vorrichtung Folgendes aufweist:
ein Interface (30) zum Empfangen von Identifikationsinformation und einer Nachricht von einem öffentlichen Kommunikationssystem (12a, 12b);
ein lokales Managementsystem (36) zum Überprüfen einer Identifikationsnummer gegen eine Liste von gültigen Identifikationsnummern, zum Anpassen eines Accounts bzw. Kontos assoziiert mit der Identifikationsnummer und zum Anpassen des Accounts, proportional zu der Länge der Nachricht;
Mittel zum Konvertieren der Nachricht in ein Format, das für Satellitensendung für das private Kommunikationssystem geeignet ist; und
Mittel zum Senden der Nachricht zu dem privaten Kommunikationssystem (20).

2. Vorrichtung nach Anspruch 1, die weiterhin Folgendes aufweist, zum Anpassen des Accounts proportional zu der Länge der Nachricht, Mittel zum Anpassen eines Accounts assoziiert mit der Benutzer-Identifikationsnummer, wenn der Account bzw. der Kontostand ausreichend ist oder Mittel zum Generieren einer Rechnung für das Senden der Nachricht, wenn der Kontostand nicht ausreichend ist.

3. Vorrichtung gemäß Anspruch 1, die weiterhin zum Anpassen des Kontos proportional zu der Länge der Nachricht ist, Mittel zum Anpassen des Kreditkarten-Accounts bzw. -Kontos assoziiert mit der Identifikationsnummer.

4. Vorrichtung nach Anspruch 1, wobei das öffentliche Kommunikationssystem (12a, 12b) ein Telefonkommunikationssystem (14) aufweist, wobei die Nachricht eine Nachricht aufweist, die von einem Menu von Nachrichten ausgewählt wird, und die Identifikationsinformation eine Identifikationsnummer aufweist.

5. Vorrichtung nach Anspruch 1, wobei das öffentliche Kommunikationssystem (12a, 12b) ein öffentlich zugreifbares Computernetzwerk (40) ist, wobei die Nachricht eine E-mail-Nachricht aufweist, und die Identifikationsinformation eine Identifikationsnummer und eine Adresse aufweist.

6. Vorrichtung nach Anspruch 4, wobei das Interface (30) ein Telefoninterfacesystem (18) aufweist.

7. Vorrichtung nach Anspruch 4, das weiterhin Folgendes aufweist:
eine Sprachantworteinheit (38) zum Vorsehen des Menus von Nachrichten an einen öffentlichen Kommunikationssystembenutzer.

8. Vorrichtung nach Anspruch 7, wobei die Sprachantworteinheit (38) ansprechend ist auf den Benutzer, der in ein Telefon spricht.

9. Vorrichtung nach Anspruch 7, wobei die Sprachantworteinheit (38) ansprechend auf das Drücken eines Knopfes bzw. einer Taste auf einem Telefon ist.

10. Vorrichtung nach Anspruch 7, wobei die Sprachantworteinheit (38) einen Text-zu-Sprache-Konverter aufweist.

11. Vorrichtung nach Anspruch 10, wobei die Sprachantworteinheit (38) einen Sprache-zu-Text-Konverter aufweist.

12. Vorrichtung nach Anspruch 1, die weiterhin einen Anrufbeantworter assoziiert mit der Identifikationsnummer aufweist.

13. Vorrichtung nach Anspruch 1, wobei die Mittel zum Senden der Nachricht ansprechend auf das lokale Management-System (36) sind.

14. Vorrichtung nach Anspruch 1, wobei die Mittel zum Senden der Nachricht weiterhin Folgendes aufweisen:
Mittel zum selektiven Assoziieren der Benutzer-Identifikation mit irgendeinem der wenigstens einem Mobil-Kommunikations-Endgeräte (60).

15. Vorrichtung nach Anspruch 2, wobei die Mittel zum Anpassen des Kontos Folgendes aufweisen:
Mittel zum Anpassen eines Lohnkontos assoziiert mit der Identifikationsnummer.

16. Vorrichtung nach Anspruch 5, wobei das Interface das lokale Managementsystem (36) aufweist.

17. Ein Verfahren zum Kommunizieren von Nachrichten zwischen einem öffentlichen Kommunikationssystembenutzer und einem Fahrzeug-Betreiber (90) unter Verwendung eines privaten Kommunikationssystems, wobei das Verfahren die folgenden Schritte aufweist:
Empfangen einer Nachricht und einer Identifikationsinformation von einem öffentlichen Kommunikationssystem (12a, 12b);
Verifizieren, dass ein Konto assoziiert mit der Identifikationsinformation einen ausreichenden Kontostand enthält, um die Nachricht zu senden, oder, dass ein Kreditkartenkonto mit der Identifikationsinformation assoziiert ist;
Anpassen des Kontos proportional zu der Länge der Nachricht;
Konvertieren der Nachricht in ein Format, dass für Satellitensendung für das private Kommunikationssystem (20) geeignet ist; und
Senden der Nachricht zum privaten Kommunikationssystem (20), wenn das Konto einen ausreichenden Kontostand enthält.

18. Verfahren nach Anspruch 17, wobei das öffentliche Kommunikationssystem (12a, 12b) ein öffentlich zugreifbares Computernetzwerk (40) ist, wobei die Nachricht eine E-mail-Nachricht aufweist, und die Identifikationsinformation eine Identifikationsnummer und eine Adresse aufweist.

19. Verfahren nach Anspruch 17, wobei das öffentliche Kommunikationssystem (12a, 12b) ein Telefonkommunikationssystem (14) aufweist, wobei die Nachricht eine Nachricht, ausgewählt von einem Menu von Nachrichten ist und die Identifikationsinformation eine Identifikationsnummer aufweist.

20. Verfahren nach Anspruch 19, wobei der Schritt des Vorsehens einer Nachricht und Identifikationsinformation die folgenden Schritte aufweist:
Generieren eines Menus von Nachrichten von einer Sprachantworteinheit (38) und
Vorsehen des Menus an einen Telefonkommunikationssystembenutzer; und
Auswählen von wenigstens einer Nachricht von dem Menu der Nachrichten von dem Telefonkommunikationssystembenutzer.

21. Ein Verfahren zum Kommunizieren von Nachrichten zwischen einem Fahrzeug-Betreiber (90) und einem öffentlichen KommunikationssystemBenutzer, wobei das Verfahren die folgenden Schritte aufweist:
Senden einer Textnachricht und Identifikationsinformation von einem Kraftfahrzeug-Betreiber (90) unter Verwendung eines privaten Kommunikationssystems an ein Interface (30);
Speichern der Textnachricht und der Identifikationsinformation in dem Interface (30), wenn ein Konto, assoziiert mit der Identifikationsinformation einen Kontostand von wenigstens gleich dem Wert, der benötigt wird, um die Textnachricht zu speichern, enthält, oder ein Kreditkonto mit der Identifikationsinformation assoziiert ist;
Reduzieren des Kontostandes oder Belasten des Kreditkartenkontos durch die Menge, die für das Speichern der Textnachricht benötigt wird;
Zugreifen auf die Textnachricht unter Verwendung des öffentlichen Kommunikationssystems (12a, 12b);
Konvertieren der Textnachricht von einem Format, geeignet für Satellitensendung zu einem Format, geeignet für das öffentliche Kommunikationssystem (12a, 12b); und
Senden der konvertierten Textnachricht von dem Interface (30) zum öffentlichen Kommunikationssystem (12a, 12b).

22. Verfahren nach Anspruch 21, wobei das öffentliche Kommunikationssystem (12a, 12b) ein Telefonkommunikationssystem (14) aufweist.

23. Verfahren nach Anspruch 21, wobei das öffentliche Kommunikationssystem (12a, 12b) ein öffentlich zugreifbares Computernetzwerk (40) aufweist.

## Revendications

1. Dispositif pour l'envoi d'un message entre un système de communication public (12a, 12b) et un système de communication privé (20), le système de communication privé comportant au moins un terminal de communication mobile (60) situé à bord d'un véhicule correspondant (48), une station pivot (32), et un système d'ordinateur de flotte (34) situé au niveau de ladite station pivot (32), le dispositif comprenant :
une interface (30) pour recevoir des informations d'identification et un message provenant d'un système de communication public (12a, 12b) ;
un système de gestion local (36) pour vérifier un numéro d'identification par rapport à une liste de numéros d'identification valides, pour ajuster un compte associé audit numéro d'identification, et pour ajuster le compte en proportion de la longueur dudit message ;
des moyens pour convertir le message en un format approprié à une transmission par satellite pour le système de communication privé ; et
des moyens d'envoi du message vers le système de communication privé (20).

2. Dispositif selon la revendication 1, comprenant en outre, pour ajuster le compte en proportion de la longueur du message, des moyens d'ajustement d'un compte associé au numéro d'identification d'utilisateur si le solde du compte est suffisant, ou des moyens de génération d'une facture pour l'envoi du message si le montant du compte est insuffisant.

3. Dispositif selon la revendication 1, comprenant en outre, pour ajuster le compte en proportion de la longueur du message, des moyens d'ajustement du compte de carte de crédit associé au numéro d'identification.

4. Dispositif selon la revendication 1, dans lequel le système de communication public (12a, 12b) comprend un système de communication téléphonique (14), ledit message comprend un message choisi dans un menu de messages, et les informations d'identification comprennent un numéro d'identification.

5. Dispositif selon la revendication 1, dans lequel le système de communication public (12a, 12b) est un réseau d'ordinateurs accessible publiquement (40), le message comprend un message de courrier électronique, et les informations d'identification comprennent un numéro d'identification et une adresse.

6. Dispositif selon la revendication 4, dans lequel ladite interface (30) comprend un système d'interface téléphonique (18).

7. Dispositif selon la revendication 4, comprenant en outre un module de réponse vocale (38) pour fournir ledit menu de messages à un utilisateur de système de communication public.

8. Dispositif selon la revendication 7, dans lequel le module de réponse vocale (38) agit en réponse au fait que l'utilisateur parle dans un téléphone.

9. Dispositif selon la revendication 7, dans lequel le module de réponse vocale (38) agit en réponse à l'appui d'un bouton sur un téléphone.

10. Dispositif selon la revendication 7, dans lequel le module de réponse vocale (38) comprend un convertisseur de texte en parole.

11. Dispositif selon la revendication 10, dans lequel le module de réponse vocale (38) comprend un convertisseur de parole en texte.

12. Dispositif selon la revendication 1, comprenant en outre une boîte de messagerie vocale associée audit numéro d'identification.

13. Dispositif selon la revendication 1, dans lequel les moyens d'envoi du message agissent en réponse au système de gestion local (36).

14. Dispositif selon la revendication 1, dans lequel les moyens d'envoi du message comprennent en outre des moyens pour associer sélectivement ladite identification d'utilisateur avec l'un quelconque desdits au moins un terminal de communication mobile (60).

15. Dispositif selon la revendication 2, dans lequel les moyens d'ajustement du compte comprennent des moyens d'ajustement d'un compte de salaire associé au numéro d'identification.

16. Dispositif selon la revendication 5, dans lequel l'interface comprend en outre ledit système de gestion local (36).

17. Procédé pour communiquer des messages entre un utilisateur de système de communication public et un opérateur de véhicule (90) utilisant un système de communication privé, comprenant les étapes suivantes :
recevoir un message et des informations d'identification provenant d'un système de communication public (12a, 12b) ;
vérifier qu'un compte associé auxdites informations d'identification contient un solde suffisant pour envoyer ledit message, ou qu'un compte de carte de crédit est associé aux informations d'identification ;
ajuster le compte en proportion de la longueur du message ;
convertir le message en un format approprié pour une transmission par satellite pour le système de communication privé (20) ; et
envoyer le message au système de communication privé (20) si le compte contient un solde suffisant.

18. Procédé selon la revendication 17, dans lequel le système de communication public (12a, 12b) est un réseau d'ordinateurs accessible publiquement (40), ledit message comprend un message de courrier électronique, et lesdites informations d'identification comprennent un numéro d'identification et une adresse.

19. Procédé selon la revendication 17, dans lequel le système de communication public (12a, 12b) comprend un système de communication téléphonique (14), le message est un message choisi dans un menu de messages, et les informations d'identification comprennent un numéro d'identification.

20. Procédé selon la revendication 19, dans lequel l'étape consistant à fournir un message et des informations d'identification comprend les étapes suivantes :
produire un menu de messages par un module de réponse vocale (38) et fournir ledit menu à un utilisateur de système de communication téléphonique ; et
choisir au moins un message dans le menu de messages par l'utilisateur de système de communication téléphonique.

21. Procédé pour communiquer des messages entre un opérateur de véhicule (90) et un utilisateur de système de communication public, comprenant les étapes suivantes :
émettre un message de texte et des informations d'identification à partir d'un opérateur de véhicule (90) utilisant un système de communication privé vers une interface (30) ;
mémoriser le message de texte et les informations d'identification dans l'interface (30) lorsqu'un compte associé aux informations d'identification contient un solde au moins égal au montant requis pour mémoriser ledit message de texte ou bien un compte de crédit est associé aux informations d'identification ;
réduire le solde du compte ou débiter le compte de carte de crédit du montant requis pour mémoriser le message de texte ;
accéder au message de texte en utilisant les systèmes de communication publics (12a, 12b) ;
convertir le message de texte à partir d'un format approprié pour une transmission par satellite en un format approprié pour le système de communication public (12a, 12b) ; et
envoyer le message de texte converti à partir de ladite interface (30) vers le système de communication public (12a, 12b).

22. Procédé selon la revendication 21, dans lequel le système de communication public (12a, 12b) comprend un système de communication téléphonique (14).

23. Procédé selon la revendication 21, dans lequel le système de communication public (12a, 12b) comprend un réseau d'ordinateurs accessible publiquement (40).
